Europäisches Patentamt

European Patent Office

Office européen des brevets

(19)

(11) Veröffentlichungsnummer: **0 233 331**
**A1**

(12) **EUROPÄISCHE PATENTANMELDUNG**

(21) Anmeldenummer: 86116088.5

(22) Anmeldetag: 20.11.86

(51) Int. Cl.³: **B 60 T 10/02**
**F 16 D 57/04**

(30) Priorität: 21.12.85 DE 3545660

(43) Veröffentlichungstag der Anmeldung:
26.08.87 Patentblatt 87/35

(84) Benannte Vertragsstaaten:
AT CH ES FR GB IT LI SE

(71) Anmelder: VOITH TURBO GMBH & CO. KG
Voithstr. 1
D-7180 Crailsheim(DE)

(72) Erfinder: Herrmann, Berthold
Arndtstrasse 17
D-7929 Gerstetten(DE)

(72) Erfinder: Brosius, Klaus
Kistelbergstrasse 58
D-7920 Heidenheim(DE)

(72) Erfinder: Spitzer, Olaf
Schwagestrasse 77
D-7928 Giengen(DE)

(72) Erfinder: Fetzer, Rudolf
Am Krebsbrückle 10
D-7180 Crailsheim(DE)

(74) Vertreter: Weitzel, Wolfgang, Dr.-Ing.
St. Pöltener Strasse 43
D-7920 Heidenheim(DE)

(54) Hydrodynamischer Retarder mit einer Einrichtung zur Reduktion der Luftventilationsleistung.

(57) Zur Verringerung der durch Luftventilation in hydrodynamischen Strömungskreisläufen, insbesondere Retardern, entstehende Leistungsverluste und Erwärmung im entleerten Zutand wird vorgeschlagen, in den Arbeitsraum eine bestimmte Menge eines Sperrmediums einzublasen. Dieses Sperrmedium kann Betriebsflüssigkeit, Luft oder ein Gemisch aus beiden sein und kann von radial innen, von außen oder vom Zentrum aus eingeführt werden. Es bildet durch die Rotation des Rotorschaufelrades einen Sperrschleier, der die Zirkulation der Luft von einem Schaufelrad zum anderen weitgehend unterbindet.

Fig. 2

EP 0 233 331 A1

G 4090 EP
Kennwort: "Ölblende"

Voith Turbo GmbH & Co. KG
Crailsheim

## Hydrodynamischer Retarder mit einer Einrichtung zur Reduktion der Luftventilationsleistung

Die Erfindung betrifft einen hydrodynamischen Retarder mit einer im ausgeschalteten Zustand wirksam werdenden Einrichtung zum Vermeiden von Verlusten durch Ventilation der Luft im Arbeitsraum des in Luft rotierenden Strömungskreislaufes, nach dem Oberbegriff des Anspruches 1.

In hydrodynamischen Bremsen (Retardern) treten bei großen Drehzahlunterschieden im entleerten Zustand Leistungsverluste durch Luftzirkulation zwischen den beiden Schaufelkränzen auf. Aus der DE-PS 11 44 317 ist bekannt, zum weitgehenden Abbau dieser Verluste, z.B. bei entleerter Bremse, in den Luftspalt zwischen Stator- und Rotorschaufelrad ähnlich wie bei einer fotografischen Blende eine Trennwand einzuschieben, welche die Luftzirkulation unterbindet.

...

Aus der DE-PS 22 27 624 ist eine andere Einrichtung bekannt, bei der zwischen den Schaufeln des einen Schaufelrades federnd verschiebbare Stößel angeordnet sind, die bei Betrieb des Retarders vom Arbeitsmedium aus dem Strömungsprofil gedrückt werden, nach Entleerung in den Arbeitsraum eintauchen und dabei ein Strömungshindernis für die zirkulierende Luft bilden.

Des weiteren ist aus der DE-PS 21 35 268 eine Einrichtung bekannt, bei der klappbare Strömungshindernisse beim Betrieb des Retarders aus dem Arbeitsraum herausgedrückt, nach Entleerung jedoch selbsttätig in den äußeren Bereich des Arbeitsraumes geklappt werden. Auch das Evakuieren des Arbeitsraumes wurde schon vorgeschlagen.

Mit bekannten Vorrichtungen läßt sich die leistungsverzehrende Luftventilation im ausgeschalteten Zustand zwar reduzieren. Diese Lösungen erfordern jedoch im Falle der DE-PS 11 44 317 eine komplizierte Automatik, mit der bei Entleerung des Arbeitsraumes die Blenden eingeschoben werden, eine aufwendige Kinematik und Führung der Blendenteile sowie ein Auseinanderrücken der Schaufelkränze, damit die Blendenteile berührungsfrei eingeschoben werden können. Dies mindert die Bremsleistung. Im Falle der anderen genannten Schriften werden Strömungshindernisse im Betrieb erst dann aus dem Arbeitsraum hinausgedrückt, wenn die Strömung intensiv genug ist, d.h. bei kleinen Drehzahlen ist mit Leistungseinbußen zu rechnen.

Aus der DE-OS 32 17 465 ist eine Einrichtung bekannt, mit der eine unzulässige Erwärmung einer hydrodynamischen Kupplung im entleerten Zustand verhindert werden soll. Dazu wird in den Arbeitsraum laufend eine bestimmte Flüssigkeitsmenge als Kühlmittel eingebracht. Im Zusammenwirken mit der eingeschlossenen Luft soll ein Teilvakuum erzeugt werden. Das Kühlmittel soll dabei die in der eingeschlossenen Luft enthaltene Wärme aufneh-

...

men und durch Ventile am Umfang der Kupplung wieder austreten. Es soll damit offensichtlich angestrebt werden, die Luft im Arbeitsraum der Kupplung im Kühlmittel zu lösen. Dazu muß jedoch das Kühlmittel, wenn es den Arbeitsraum der Kupplung verlassen hat, in einen unter Atmosphärendruck stehenden offenen Behälter zurückgeführt werden, damit die Luft aus dem Kühlmittel entweichen kann. Das Kühlmittel muß demzufolge luftfrei dem Arbeitsraum zugeführt werden. Es ist zweifelhaft, ob das Kühlmittel unter Bedingungen eines Teilvakuums in der Lage ist, überhaupt Luft in sich aufzunehmen. Es ist ferner notwendig, am rotierenden Schaufelrad vor der Austrittskante der Schaufeln Öffnungen anzubringen, so daß die von den Schaufeln gebildeten Schaufelkanäle an diesen Stellen radial nach außen offen sind.

Diese Ausbildung der Schaufeln ist für einen Retarder nachteilig, weil dadurch das entwickelte Bremsmoment entscheidend verringert wird. Ferner erfolgt die Zufuhr des Arbeitsmediums zu einem Retarder im allgemeinen in einem geschlossenen Kreislauf, der das Entweichen von Luft aus dem Arbeitsmedium nicht ermöglicht, vielmehr wird ein Retarder im allgemeinen mit einem Flüssigkeits-Luftgemisch betrieben, wobei der Arbeitsraum des Retarders unter Überdruck steht, so daß die Luft im Arbeitsmedium gelöst bleibt und keinen nachteiligen Einfluß auf die Betriebsweise des Retarders hat. Eine Vorrichtung gemäß der DE-OS 32 17 465 ist daher für einen Retarder nicht verwendbar.

Die Aufgabe der Erfindung besteht darin, die Nachteile bekannter Einrichtungen zu vermeiden und einen Retarder vorzuschlagen, bei dem mit einfachsten Mitteln zuverlässig eine noch weitergehende Reduktion der Luftventilationsleistung erzielt wird.

...

Diese Aufgabe wird durch Anwendung der kennzeichnenden Merkmale des Anspruches 1 gelöst. Gemäß der Erfindung wird im ausgeschalteten, d.h. entleerten Zustand, anstelle des Arbeitsmediums eine im Vergleich zur Füllmenge im Betrieb geringe Menge eines strömungs- bzw. fließfähigen Sperrmediums in den Arbeitskreislauf eingeleitet. Die Erfinder haben erkannt, daß die Wirkung der bekannten Einrichtungen zur Reduktion der Luftventilation vor allem darin besteht, daß die Zirkulation der Luft zwischen den Schaufelrädern nur unvollständig unterbunden und somit nicht ausreichend gestört wird. Dies wahrscheinlich deshalb, weil der stirnseitige Querschnitt zwischen den benachbarten Schaufelkränzen durch die mechanischen Strömungshindernisse nicht ganzflächig geschlossen ist.

Gemäß der Erfindung wird eine Störung der Luftzirkulation dadurch herbeigeführt, daß eine bestimmte kleine Menge eines Sperrmediums, die zum Füllen des Arbeitsraumes nicht ausreicht, fortwährend zu- und wieder abgeführt wird. Dafür sorgt ein eigener Nebenkreislauf für das Sperrmedium mit Zu- und Abführleitungen. Nach Eintritt des Sperrmediums in den Arbeitsraum wird dieses von der an den umlaufenden Schaufelrädern haftenden Grenzschicht und der mitrotierenden Luft-Strömung erfaßt, und es bildet sich ein dünner scheibenförmiger Sperrschleier, der die Luft am leistungsverzehrenden Überwechseln von einem Schaufelrad zum anderen hindert. Es sind dazu keine weiteren mechanisch bewegten Elemente erforderlich.

Der Vorteil dieser Ausführung besteht in der besonders einfachen Bauart, die ohne verschleißbehaftete Bauteile und ohne aufwendige Steuerung auskommt und dabei zuverlässige Funktion gewährleistet. Durch die andauernde Zirkulation des Sperrmediums zum und aus dem Arbeitsraum wird außerdem eine intensive Abfuhr der Wärme erreicht, die noch von der vorausgehenden Betriebsphase in den Bauteilen des Strömungskreislaufes, insbesondere Retarders, steckt. Es ist dadurch auch verhindert, daß sich der Strömungskreislauf in Betriebspausen wie bisher durch die Luftventilation erwärmt.

...

Als Sperrmedium kann gemäß den Ansprüchen 2 und 3 Luft dienen
oder ein Gemisch, das im wesentlichen aus flüssigem Arbeitsmedium und Luft besteht, wozu dann vorzugsweise das Arbeitsmedium
benützt wird, das zum Betrieb des Strömungskreislaufes dient.
Die weiteren Unteransprüche richten sich auf vorteilhafte Ausgestaltungen und Anordnungen der Mündung des Zuführkanals für
das Sperrmedium. Der Zulaufkanal kann am Eintritt mit einer
oder mehreren Düsen ausgestattet sein, die entweder im radial
inneren Nabenbereich, am radial äußeren Bereich, außerhalb des
Arbeitsraumes oder nahe dem Zentrum, am sogenannten Kernring,
angebracht sind. Es ist auch möglich, die Düsen so anzuordnen,
daß nur der radial äußere Bereich des freien Querschnitts zwischen den Schaufelrädern von einem Schleier aus Sperrmedium
bedeckt wird, um die Zirkulation der eingeschlossenen Luft zu
stören. Die Düsen können an einem rotierenden Bauteil, z.B.
einem Schaufelrad oder einem feststehenden Schaufelrad bzw. am
Gehäuse angeordnet sein. Besonders vorteilhaft ist die direkte
Einspritzung des Sperrmediums in den Spalt zwischen den Schaufelrädern.

Der Austritt des Sperrmediums kann entweder über das feststehende oder das rotierende Schaufelrad erfolgen und zwar über
radial außen angebrachte Öffnungen oder durch den erwähnten
Spalt. Die Schaufelräder können von einem ringförmigen Kanal
umgeben sein, der das austretende Sperrmedium aufnimmt.

Ein weiterführender Gedanke der Erfindung besteht darin, die
Zirkulation des Sperrmediums anstelle einer Umwälzpumpe durch
die Energie der Strömung im Arbeitsraum selbst herbeizuführen.
Das Sperrmedium wird durch einen Auslaßkanal aus dem Arbeitsraum geleitet und durch einen Einlaßkanal gekühlt und gezielt
wieder zugeführt. Außerhalb des Retarders ist ein Behälter angeordnet, beispielsweise ein Wärmetauscher, der mit Flüssigkeit
bis zu einer bestimmten Höhe gefüllt ist. Die aus dem Arbeitsraum austretende Luft oder Flüssigkeits-Luftgemisch wird über

...

die Oberfläche der im Behälter befindlichen Flüssigkeit geleitet, so daß die zur Bildung eines Sperrschleiers im Arbeitskreislauf notwendige bestimmte Menge Flüssigkeit mitgerissen wird.

Die Erfindung ist nicht nur anwendbar für Strömungskreisläufe mit zwei Schaufelrädern, also Strömungsbremsen oder Strömungskupplungen, sondern auch bei Drehmomentwandlern mit mindestens drei beschaufelten Gliedern, nämlich einem Pumpenrad, einem Turbinenrad und einem Leitrad, insbesondere wenn ein Drehmomentwanlder zeitweise zum Bremsen eingesetzt wird.

Besondere Vorteile bringt die Erfindung bei einem Retarder, dessen Schaufelräder gegensinnig rotieren. Dort nämlich ist es konstruktiv aufwendig, in den Spalt zwischen die beiden Schaufelräder ohne Nachteile für die Bremswirkung noch mechanisch betätigbare Blendenschieber einzubauen. Vorzugsweise wird eines der rotierenden Schaufelräder mit Öffnungen zum Eintritt von Sperrmedium in den Arbeitsraum versehen. Eine weitere Vereinfachung durch die erfindungsgemäße Lösung besteht darin, daß Sperrmedium auch dann zuströmen kann, wenn der Retarder in Betrieb ist. Dadurch entfallen spezielle Füll- und Entleermaßnahmen für den Leerlaufbetrieb. Die Zu- und Rückleitungen für das Arbeitsmedium können unabhängig sein von denen des Sperrmediumkreislaufes.

Die Erfindung wird anhand der Zeichnung näher erläutert. Darin zeigen

Fig. 1 bis 3    jeweils einen Retarder in schematischer Schnittdarstellung mit verschiedenen Ausführungen der Ein- und Auslaßkanäle für das Sperrmedium;

Fig. 4          einen Retarder mit gegensinnig rotierenden Schaufelrädern;

...

Fig. 5        ein Beispiel für einen Retarder mit kombiniertem
              Haupt- und Nebenkreislauf für das Sperrmedium.

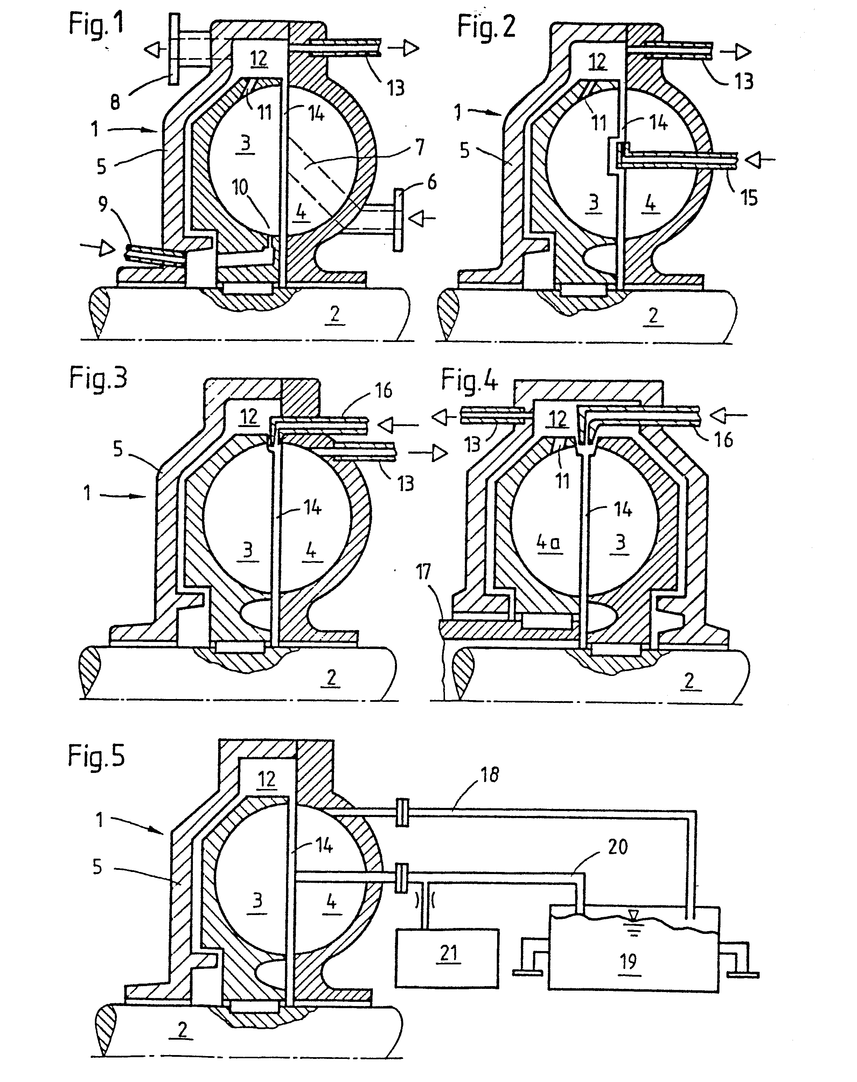

In allen Figuren sind identische Teile mit denselben Positionszahlen versehen. Die Figur 1 zeigt einen Retarder 1, angetrieben von einer Welle 2, auf welcher ein Rotorschaufelrad 3 befestigt ist und dem ein Statorschaufelrad 4 gegenübersteht, welches seinerseits in einem Gehäuse 5 drehfest angeordnet ist.
Mit 6 ist eine Öffnung bezeichnet für den Eintritt des Arbeitsmediums, das beim Bremsen durch einen Kanal 7 in den Arbeitsraum eintritt und durch eine Auslaßöffnung 8 den Retarder wieder verläßt. Weitere Details des Hauptkreislaufes zur Versorgung des Retarders im Bremsbetrieb sind in dieser und den weiteren Figuren der Deutlichkeit wegen weggelassen.

Ein Nebenkreislauf ist gebildet zur Versorgung des Retarders
während der Bremspausen. Dazu befindet sich in einem radial
inneren Bereich des Gehäuses 5 ein Einlaßkanal 9 für das Sperrmedium. Letzteres tritt in den von den Schaufelrädern 3 und 4
gebildeten Arbeitsraum über eine Düse 10 ein. Diese Düse 10
kann radial innen oder außen am Rotorschaufelrad 3 angebracht
sein, so daß der Strahl in den Arbeitsraum radial nach außen
oder nach innen gerichtet ist. Durch die Rotation des Schaufelrades 3 bildet das Sperrmedium einen Schleier im Bereich des
Spalts 14 zwischen den Schaufelrädern und verläßt den Arbeitsraum wieder durch eine Bohrung 11 im äußeren Bereich des Arbeitsraums in einen Aufnahmeraum 12, in den ein Auslaßkanal 13
einmündet. Vom Auslaßkanal 13 wird das Sperrmedium nach entsprechender Aufbereitung und Kühlung wieder zum Einlaßkanal 9
geleitet. Die Strömungsrichtung des Sperrmediums ist mit Pfeilen dargestellt, ebenso in den folgenden Figuren. Weitere Einrichtungen zur Aufrechterhaltung des Nebenkreislaufs sind in
den Fig. 1 bis 4 nicht dargestellt, also z.B. eine Umwälzpumpe
und eine Kühleinrichtung.

In Figur 2 ist ein Retarder dargestellt, der im Gegensatz zur
Ausführung gemäß Figur 1 einen ins Zentrum des Arbeitsraumes

...

führenden Einlaßkanal für das Sperrmedium aufweist. Am Ende des Einlaßkanales 15 ist eine Düse angebracht, die einen radial nach außen gerichteten Strahl von Sperrmedium direkt in den Spalt 14 zwischen den Schaufelrädern abgibt. Das Sperrmedium verläßt den Arbeitsraum wie bei der Ausführung gemäß Figur 1 über die Bohrung 11 und den Auslaßkanal 13.

In Figur 3 ist ein Retarder dargestellt, bei dem das Sperrmedium durch eine an einem Einlaßkanal 16 radial nach innen weisende Düse direkt in den Spalt 14 zwischen den Schaufelrädern eingeleitet wird. Bei dieser Ausführung bildet sich ein besonders dichter Sperrschleier im radial äußeren Bereich des Spalts 14. Es wurde erkannt, daß die Luftventilation vor allem im äußeren Bereich des Arbeitsraums für das Auftreten von Verlusten verantwortlich ist. Durch einen Auslaßkanal 13, der im radial äußeren Bereich des stehenden Schaufelrades 4 angebracht ist, verläßt das Sperrmedium den Arbeitsraum.

Die Figur 4 zeigt einen Retarder mit zwei Schaufelrädern, nämlich einem ersten Schaufelrad 3, das auf einer Antriebswelle 2 befestigt ist, und einem zweiten Schaufelrad 4a, das auf einer zweiten Welle 17 befestigt ist und welches sich gegensinnig zum Schaufelrad 3 dreht. Die Gegenrotation kann über ein nicht dargestelltes Umkehrgetriebe zwischen der Antriebswelle 2 und der Welle 17 herbeigeführt werden. Bei dieser, auch Gegenlaufretarder genannten Ausführung wird vorzugsweise wiederum die schon in Figur 3 dargestellte Einspritzung des Sperrmediums radial von außen in den Spalt 14 vorgenommen. Das Sperrmedium verläßt den Arbeitsraum wiederum durch eine Bohrung 11 in einen Aufnahmeraum 12 des Gehäuses 5, welches beide Schaufelräder 3, 4a einschließt.

Eine weitere Ausführungsform eines Retarders ist in Figur 5 dargestellt. Dort ist der Hauptkreislauf für das im Bremsbetrieb zirkulierende Arbeitsmedium und der Nebenkreislauf für

...

das Sperrmedium kombiniert. In Bremspausen werden dieselben Rohrleitungen und Ein- bzw. Auslaßkanäle für das Sperrmedium verwendet wie für das Füllen des Retarders zum Bremsen. Die für den Bremsbetrieb erforderlichen zusätzlichen Organe sind der Übersichtlichkeit halber weggelassen. Als Sperrmedium wird bei diesem Beispiel ein aus Luft und Betriebsflüssigkeit bestehendes Gemisch verwendet. Ein Auslaßkanal 18 und ein Einlaßkanal 20 sind an einen Behälter 19 angeschlossen. Dieser Behälter kann beispielsweise ein Wärmetauscher sein. Der Auslaßkanal 18 ist so im äußeren Bereich des Arbeitsraumes angeordnet, daß das Sperrmedium durch die innewohnende Energie durch Rotation herausgeschleudert und in den Behälter 19 gedrückt wird. Dabei wird der Innenraum des Behälters 19 unter Druck gesetzt, so daß durch den Einlaßkanal 20 eine Nebenkreislauf-Strömung zustandekommt. Das behälterseitige Ende des Einlaßkanals 20 ist so angeordnet, daß beim Einströmen von Luft gleichzeitig eine bestimmte Menge Flüssigkeit in den Einlaßkanal mitgerissen wird. Der Eintritt des Sperrmediums in den Arbeitsraum erfolgt wiederum in der Nähe des Zentrums in den Spalt 14 zwischen den Schaufelrädern. Ein Behälter 21 nimmt überschüssiges Sperrmedium auf. Der Hauptkreislauf zur Versorgung des Retarders für sich allein ist bekannt aus der DE-AS 22 38 726.

11.11.1986 DK/Py
0340k/98-106

## Patentansprüche

1.  Hydrodynamischer Retarder, bestehend aus mindestens zwei mit Schaufeln versehenen Rädern, die jeweils paarweise einen torusförmigen Arbeitsraum bilden, der über einen Hauptkreislauf zum Einschalten wenigstens teilweise mit einem Arbeitsmedium füllbar und zum Ausschalten entleerbar ist, ferner Mittel zur Verminderung der Luftventilationsleistung im entleerten Zustand aufweist, dadurch gekennzeichnet, daß zur Unterbrechung der Luftventilation zwischen den Schaufelrädern (3, 4) eine im Vergleich zum Rauminhalt des Arbeitsraumes geringe Menge eines strömungsfähigen Sperrmediums in einem Nebenkreislauf durch den Arbeitsraum hindurchführbar ist.

2.  Hydrodynamischer Retarder nach Anspruch 1, dadurch gekennzeichnet, daß als Sperrmedium Luft verwendet wird.

3.  Hydrodynamischer Retarder nach Anspruch 1, dadurch gekennzeichnet, daß der Arbeitsraum im Bremsbetrieb mit einem flüssigen Arbeitsmittel und im ausgeschalteten Zustand mit einem im wesentlichen aus flüssigem Arbeitsmittel und Luft bestehenden Gemenge als Sperrmedium füllbar ist.

4.  Hydrodynamischer Retarder nach einem der Ansprüche 1 bis 3, dadurch gekennzeichnet, daß sich die Mündung (10) des Zufuhrkanals (9) für das Sperrmedium im radial inneren Bereich des Arbeitsraumes befindet.

5.  Hydrodynamischer Retarder nach einem der Ansprüche 1 bis 3, dadurch gekennzeichnet, daß sich die Mündung des Zufuhrkanals (16) für das Sperrmedium im radial äußeren Bereich des Arbeitsraumes befindet.

...

6. Hydrodynamischer Retarder nach einem der Ansprüche 1 bis 5, dadurch gekennzeichnet, daß die Mündung (10) des Zulaufkanals (9) für das Sperrmedium an demjenigen Schaufelrad (3) angeordnet ist, das mit der Antriebswelle (2) des Retarders (1) umläuft.

7. Hydrodynamischer Retarder nach einem der Ansprüche 1 bis 5, dadurch gekennzeichnet, daß die Mündung (10) des Zulaufkanals für das Sperrmedium an einem nicht umlaufenden Bauteil (4, 5) angeordnet ist.

8. Hydrodynamischer Retarder nach Anspruch 7, dadurch gekennzeichnet, daß die Mündung des Zulaufkanals für das Sperrmedium an einem nicht drehbaren Schaufelrad (4) angeordnet ist.

9. Hydrodynamischer Retarder nach einem der Ansprüche 1 bis 8, dadurch gekennzeichnet, daß der aus der Mündung des Zulaufkanals austretende Sperrmediumstrahl radial gerichtet ist.

10. Hydrodynamischer Retarder nach einem der Ansprüche 1 bis 10, dadurch gekennzeichnet, daß die Strahlrichtung gegen die Radialrichtung geneigt ist.

11. Hydrodynamischer Retarder nach Anspruch 1 bis 10, dadurch gekennzeichnet, daß der Strahl des Sperrmediums in den Spalt (14) zwischen die Schaufelräder (3, 4, 4a) gerichtet ist.

12. Hydrodynamischer Retarder nach einem der Ansprüche 1 bis 11, dadurch gekennzeichnet, daß der Arbeitsraum in einen Kreislauf mit Zwangsumlauf für das Sperrmedium eingebunden ist, der eine Kühleinrichtung aufweist.

...

13. Hydrodynamischer Retarder nach Anspruch 12, dadurch gekennzeichnet, daß die Umwälzung des Sperrmediums durch Ventilationswirkung der Schaufelräder im Arbeitskreislauf erfolgt und daß im Kreislauf des Sperrmediums ein Behälter (19) vorgesehen ist, aus dem der Strömungskreislauf das Sperrmedium selbst ansaugt.

14. Hydrodynamischer Retarder nach einem der Ansprüche 1 bis 13, dadurch gekennzeichnet, daß die Schaufelräder (3, 4a) gegensinnig rotieren und daß wenigstens eines der Schaufelräder mindestens eine Durchtrittsöffnung (11) für Sperrmedium aufweist.

11.11.86 DK/Py
0340k/95-97

0233331

Fig. 1

Fig. 2

Fig. 3

Fig. 4

Fig. 5

**0233331**

Nummer der Anmeldung

EP 86 11 6088

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-4 004 660  (SHORE et al.)<br>* Figur 6; Spalte 5, Zeilen 15-49 * | 1 | B 60 T  10/02<br>F 16 D  57/04 |
| A | US-A-3 958 671  (MULLER)<br>* ganzes Dokument * | 1 | |
| D,A | DE-C-2 135 268  (VOITH GETRIEBE)<br>* ganzes Dokument * | 1 | |
| D,A | DE-A-2 238 726  (VOITH TURBO)<br>* ganzes Dokument * | 1 | |
| D,A | DE-A-3 217 465  (MOTOREN- UND TURBINENUNION)<br>* ganzes Dokument * | 1 | |

|  | RECHERCHIERTE SACHGEBIETE (Int Cl 4) |
|---|---|
|  | F 16 D  57/00<br>B 60 T  10/00 |

Der vorliegende Recherchenbericht wurde für alle Patentansprüche erstellt

| Recherchenort<br>BERLIN | Abschlußdatum der Recherche<br>26-03-1987 | Prüfer<br>STANDRING M A |
|---|---|---|